# EUROPEAN PATENT APPLICATION

(11) **EP 1 587 157 A2**
(43) Date of publication of application: **19.10.2005**
(21) Application number: 05252352.9
(22) Date of filing: 15.04.2005
(51) Int. Cl.: H01M 8/04, H01M 8/06

(54) **Fuel cell operation method**

(30) Priority: 16.04.2004 US 562531
(71) Applicant: NGK INSULATORS, LTD., Nagoya-City, Aichi Pref. 467-8530 (JP)
(72) Inventor: Kurashima, Yoshihiko, c/o NGK Insulators, Ltd., Nagoya City, Aichi-ken, 467-8530 (JP); Honda, Toshihiko, c/o NGK Insulators, Ltd., Nagoya City, Aichi-ken, 467-8530 (JP)
(74) Representative: Paget, Hugh Charles Edward

(57) **Abstract**

There is provided a fuel cell having a prolonged life by uniformly causing a hydrogen ionization reaction to occur at a fuel electrode, a fuel cell power generation device using the same, and the system using the same as well. There is also provided a method for operating a fuel cell in which a plurality of unit cells are stacked, each of the unit cells including a fuel electrode to which a fuel containing hydrogen as a major component is supplied, an air electrode to which air is supplied as an oxidizing agent, and an electrolyte provided between the fuel electrode and the air electrode. This operation method is characterized in that the number of moles of oxygen contained in air supplied to the air electrode is controlled based on the measured value such as number of moles of hydrogen contained in the incoming or outgoing fuel from the cell.

## Description

### BACKGROUND OF THE INVENTION

### Field of the Invention

The present invention relates to a fuel cell operation method wherein the life of a fuel cell may be prolonged by uniformly causing a hydrogen ionization reaction to occur at a fuel electrode, and a fuel cell power generation device and a fuel cell power generation system for the realization of such an operation method.

### Description of Related Art

A fuel cell is a device exhibiting excellent energy conversion efficiency due to capability of electrochemically and directly converting the chemical energy of a fuel into electric energy without combusting the fuel. In particular, a fuel cell in which hydrogen is supplied to a fuel electrode (anode electrode) as a fuel and oxygen in air is used for an air electrode (cathode electrode) produces only water during energy generation due to the reaction between hydrogen and oxygen, and does not produce substances increasing the load on the environment such as carbon dioxide, nitrogen oxide, sulfur oxide, and the like, differing from a device which generates energy by burning a fossil fuel such as oil or coal. Therefore, such a fuel cell is expected to act as a clean energy source.

The fuel cell includes a fuel electrode which is caused to come in contact with hydrogen (fuel) and an air electrode which is caused to come in contact with oxygen (air or oxidizing agent), with an electrolyte being provided between the fuel electrode and the air electrode. The electrolyte is provided as a polymer ion-exchange membrane (polymer electrolyte fuel cell) or a phosphoric acid-containing matrix (phosphoric acid fuel cell), for example. In the fuel cell, when hydrogen is supplied to the fuel electrode, the hydrogen dissociates into a hydrogen ion and an electron. The dissociated electron moves toward the air electrode through an external circuit, and the hydrogen ion which has passed through the electrolyte, the electron from the external circuit, and oxygen react at the air electrode to produce water. Electricity is generated by such reactions shown below (see also JP-A-9-55219 for phosphoric acid fuel cell, for example):
Fuel electrode reaction: 2H₂→4H⁺+4e
Air electrode reaction: O₂+4H⁺+4e →2H₂O

### SUMMARY OF THE INVENTION

Such a fuel cell has a problem to be solved relating to the short life. As a result of studies, it was found that occurrence of an excessive local load at the fuel electrode is one of the causes of short life. Since the production cost of hydrogen as the fuel is higher than that of the oxidizing agent for which air can be used, a conventional fuel cell is operated by supplying oxygen (air) in excess of the amount of hydrogen in order to efficiently utilize hydrogen. Therefore, hydrogen supplied to the fuel cell is always in an ionizable state and is immediately ionized when supplied to the vicinity of the entrance of the fuel electrode, whereby a local ionization reaction occurs (polarization occurs). This phenomenon causes a load to be applied to a part of the anode electrode which makes up the fuel electrode, whereby deterioration of the electrode material and the electrolyte is locally accelerated.

In particular, since the output per unit cell of a normal fuel cell is less than 1 V, it is necessary to form the fuel cell by serially stacking 400 to 500 unit cells in order to obtain 400 V which is the voltage generally used in factories, for example. This makes it necessary to evenly distribute hydrogen to the 400 to 500 unit cells. However, since it is extremely difficult to evenly distribute hydrogen to the 400 to 500 unit cells, a local load tends to occur at the fuel electrode, whereby the life is decreased.

The present invention has been achieved in view of the above-described problems. An objective of the present invention is to provide a fuel cell of which the life is prolonged by preventing occurrence of a local hydrogen ionization reaction at the anode electrode which makes up the fuel electrode. As a result of extensive studies, it was found that the above objective can be achieved by means for providing a sufficient amount of hydrogen with respect to the amount of oxygen to the fuel electrode of the fuel cell, and providing a small amount of oxygen (air) with respect to the amount of hydrogen to the air electrode of the fuel cell in a state in which hydrogen is distributed over the electrolyte and the fuel electrode while controlling the flow rate to effect power generation. In other words, power generation is rate-determined by the amount of oxygen instead of the amount of hydrogen, and electricity is generated by providing a small amount of oxygen with respect to the amount of hydrogen in a state in which hydrogen ions are sufficiently distributed over the electrolyte to such an extent that a predetermined amount of unreacted hydrogen is always discharged from the fuel cell. This prevents the polarization of hydrogen at the fuel electrode which occurs in a conventional fuel cell, whereby the life of the fuel cell can be prolonged. This can be made by controlling oxygen amount based on the amount of hydrogen obtained by measuring the amount of hydrogen contained in the fuel supplied to the fuel electrode or hydrogen remained unreacted in the fuel discharged from the fuel electrode, or other characteristics values such as temperature, or voltage of the unit cells or module cells. The present invention will be explained further in detail below.

Specifically, according to the present invention, there is provided a method for operating a fuel cell in which a plurality of unit cells are stacked, each of the unit cells including a fuel electrode to which a fuel containing hydrogen as a major component is supplied, an air electrode to which air is supplied as an oxidizing agent, and an electrolyte provided between the fuel electrode and the air electrode, the method comprising: controlling a number of moles of oxygen contained in the air supplied to the air electrode so that the number of moles of oxygen is 1/2 or less of a number of moles of hydrogen contained in the fuel supplied to the fuel electrode (hereinafter may be called "first fuel cell operation method").

According to the present invention, there is provided a method for operating a fuel cell in which a plurality of unit cells are stacked, each of the unit cells including a fuel electrode to which a fuel containing hydrogen as a major component is supplied, an air electrode to which air is supplied as an oxidizing agent, and an electrolyte provided between the fuel electrode and the air electrode, the method comprising: controlling a number of moles of oxygen contained in the air supplied to the air electrode so that a number of moles of unreacted hydrogen contained in the fuel discharged from the fuel electrode is equal to or greater than a predetermined value (hereinafter may be called "second fuel cell operation method").

According to the present invention, there is provided a method for operating a fuel cell formed by connecting a plurality of module cells, each of the module cells being formed by stacking a plurality of unit cells, each of the unit cells including a fuel electrode to which a fuel containing hydrogen as a major component is supplied, an air electrode to which air is supplied as an oxidizing agent, and an electrolyte provided between the fuel electrode and the air electrode, the method comprising: individually measuring temperatures of the module cells, and controlling a number of moles of oxygen contained in the air supplied to the air electrode so that a temperature difference between the respective module cells is equal to or less than a predetermined value (hereinafter may be called "third fuel cell operation method").

According to the present invention, there is provided a method for operating a fuel cell formed by connecting a plurality of module cells, each of the module cells being formed by stacking a plurality of unit cells, each of the unit cells including a fuel electrode to which a fuel containing hydrogen as a major component is supplied, an air electrode to which air is supplied as an oxidizing agent, and an electrolyte provided between the fuel electrode and the air electrode, the method comprising: individually measuring voltages of the module cells, and controlling a number of moles of oxygen contained in the air supplied to the air electrode so that a voltage difference between the respective module cells is equal to or less than a predetermined value (hereinafter may be called "fourth fuel cell operation method").

According to the present invention, there is provided a method for operating a fuel cell in which a plurality of unit cells are stacked, each of the unit cells including a fuel electrode to which a fuel containing hydrogen as a major component is supplied, an air electrode to which air is supplied as an oxidizing agent, and an electrolyte provided between the fuel electrode and the air electrode, the method comprising: individually measuring temperatures of the unit cells, and controlling a number of moles of oxygen contained in the air supplied to the air electrode so that a temperature difference between the respective unit cells is equal to or less than a predetermined value (hereinafter may be called "fifth fuel cell operation method").

According to the present invention, there is provided a method for operating a fuel cell in which a plurality of unit cells are stacked, each of the unit cells including a fuel electrode to which a fuel containing hydrogen as a major component is supplied, an air electrode to which air is supplied as an oxidizing agent, and an electrolyte provided between the fuel electrode and the air electrode, the method comprising: individually measuring voltages of the unit cells, and controlling a number of moles of oxygen contained in the air supplied to the air electrode so that a voltage difference between the respective unit cells is equal to or less than a predetermined value (hereinafter may be called "sixth fuel cell operation method").

According to the present invention, there is provided a fuel cell power generation device which comprises a fuel cell in which a plurality of unit cells are stacked, each of the unit cells including a fuel electrode to which a fuel containing hydrogen as a major component is supplied, an air electrode to which air is supplied as an oxidizing agent, and an electrolyte provided between the fuel electrode and the air electrode; hydrogen supply measurement means; and oxygen supply control means for controlling a number of moles of oxygen contained in the air supplied to the air electrode based on data measured by the hydrogen supply measurement means, wherein the hydrogen supply measurement means measures a number of moles of hydrogen contained in the fuel supplied to the fuel electrode or a number of moles of unreacted hydrogen contained in the fuel discharged from the fuel electrode. The explanation on the embodiments will be made as follows.

According to the present invention, there is provided a fuel cell power generation device, comprising: a fuel cell in which a plurality of unit cells are stacked, each of the unit cells including a fuel electrode to which a fuel containing hydrogen as a major component is supplied, an air electrode to which air is supplied as an oxidizing agent, and an electrolyte provided between the fuel electrode and the air electrode; hydrogen supply measurement means for measuring a number of moles of hydrogen contained in the fuel supplied to the fuel electrode; and oxygen supply control means for controlling a number of moles of oxygen contained in the air supplied to the air electrode (hereinafter may be called "first fuel cell power generation device").

According to the present invention, there is provided a fuel cell power generation device, comprising: a fuel cell in which a plurality of unit cells are stacked, each of the unit cells including a fuel electrode to which a fuel containing hydrogen as a major component is supplied, an air electrode to which air is supplied as an oxidizing agent, and an electrolyte provided between the fuel electrode and the air electrode; hydrogen discharge measurement means for measuring a number of moles of unreacted hydrogen contained in the fuel discharged from the fuel electrode; and oxygen supply control means for controlling a number of moles of oxygen contained in the air supplied to the air electrode (hereinafter may be called "second fuel cell power generation device").

According to the present invention, there is further provided a fuel cell power generation device which comprises a fuel cell formed by connecting a plurality of module cells, each of the module cells being formed by stacking a plurality of unit cells, each of the unit cells including a fuel electrode to which a fuel containing hydrogen as a major component is supplied, an air electrode to which air is supplied as an oxidizing agent, and an electrolyte provided between the fuel electrode and the air electrode; means for measuring a difference in a characteristic value between the respective module cells; and oxygen supply control means for controlling a number of moles of oxygen contained in the air supplied to the air electrode based on data measured by the means for measuring a difference in a characteristic value between the respective module cells, wherein the characteristic value is temperature or voltage. The explanation on the embodiments will be made as follows.

According to the present invention, there is also provided a fuel cell power generation device, comprising: a fuel cell formed by connecting a plurality of module cells, each of the module cells being formed by stacking a plurality of unit cells, each of the unit cells including a fuel electrode to which a fuel containing hydrogen as a major component is supplied, an air electrode to which air is supplied as an oxidizing agent, and an electrolyte provided between the fuel electrode and the air electrode; temperature difference measurement means for measuring a temperature difference between the respective module cells; and oxygen supply control means for controlling a number of moles of oxygen contained in the air supplied to the air electrode (hereinafter may be called "third fuel cell power generation device").

According to the present invention, there is provided a fuel cell power generation device, comprising: a fuel cell formed by connecting a plurality of module cells, each of the module cells being formed by stacking a plurality of unit cells, each of the unit cells including a fuel electrode to which a fuel containing hydrogen as a major component is supplied, an air electrode to which air is supplied as an oxidizing agent, and an electrolyte provided between the fuel electrode and the air electrode; voltage difference measurement means for measuring a voltage difference between the respective module cells; and oxygen supply control means for controlling a number of moles of oxygen contained in the air supplied to the air electrode (hereinafter may be called "fourth fuel cell power generation device").

According to the present invention, there is provided a fuel cell power generation device, comprising: a fuel cell in which a plurality of unit cells are stacked, each of the unit cells including a fuel electrode to which a fuel containing hydrogen as a major component is supplied, an air electrode to which air is supplied as an oxidizing agent, and an electrolyte provided between the fuel electrode and the air electrode; temperature difference measurement means for measuring a temperature difference between the respective unit cells; and oxygen supply control means for controlling a number of moles of oxygen contained in the air supplied to the air electrode (hereinafter may be called "fifth fuel cell power generation device").

According to the present invention, there is provided a fuel cell power generation device, comprising: a fuel cell in which a plurality of unit cells are stacked, each of the unit cells including a fuel electrode to which a fuel containing hydrogen as a major component is supplied, an air electrode to which air is supplied as an oxidizing agent, and an electrolyte provided between the fuel electrode and the air electrode; voltage difference measurement means for measuring a voltage difference between the respective unit cells; and oxygen supply control means for controlling a number of moles of oxygen contained in the air supplied to the air electrode (hereinafter may be called "sixth fuel cell power generation device").

According to the present invention, there is further provided a fuel cell power generation system which comprises a firing furnace which includes combustion means for producing a combustion gas by burning a fuel containing methane, and a firing furnace body which fires a firing target substance carried therein by the combustion gas; a reformer which is filled with a methane reforming catalyst, causes a reformation raw material including the fuel containing methane and steam entering the reformer to come in contact with the methane reforming catalyst while heating the raw material to cause the methane and the steam in the reformation raw material to react, thereby producing a reformed gas containing hydrogen and carbon dioxide; and a fuel cell power generation device comprising a fuel cell in which a plurality of unit cells are stacked, each of the unit cells including a fuel electrode to which a fuel containing hydrogen as a major component is supplied, an air electrode to which air is supplied as an oxidizing agent, an electrolyte provided between the fuel electrode and the air electrode, a measurement means for measuring a number of moles in hydrogen in the fuel, or a difference in a characteristic value each of the respective unit cells, oxygen supply control means for controlling a number of moles of oxygen contained in the air supplied to the air electrode based on data measured by the measurement means, wherein the measurement means measures a number of moles of hydrogen contained in the fuel supplied to the fuel electrode, a number of moles of unreacted hydrogen contained in the fuel discharged from the fuel electrode or a difference in a temperature or voltage between the respective unit cells; wherein the reformed gas containing hydrogen is produced by the reformer by using exhaust heat of the combustion gas produced by the firing furnace body, electricity is generated by using the reformed gas as the fuel for the fuel cell, and an unreacted reformed gas discharged from the fuel cell is burnt as the fuel for the combustion means, thereby effectively utilizing the reformed gas containing hydrogen and converting a part of thermal energy of the combustion gas into electric energy. The unit cells may form the module cells. The further explanation on the embodiments will be made as follows.

According to the present invention, there is provided a fuel cell power generation system, comprising: a firing furnace which includes combustion means for producing a combustion gas by burning a fuel containing methane, and a firing furnace body which fires a firing target substance carried therein by the combustion gas; a reformer which is filled with a methane reforming catalyst, causes a reformation raw material including the fuel containing methane and steam entering the reformer to come in contact with the methane reforming catalyst while heating the raw material to cause the methane and the steam in the reformation raw material to react, thereby producing a reformed gas containing hydrogen and carbon dioxide; and any of the first to sixth fuel cell power generation devices; wherein the reformed gas containing hydrogen is produced by the reformer by using exhaust heat of the combustion gas produced by the firing furnace body, electricity is generated by using the reformed gas as the fuel for the fuel cell, and an unreacted reformed gas discharged from the fuel cell is burnt as the fuel for the combustion means, thereby effectively utilizing the reformed gas containing hydrogen and converting a part of thermal energy of the combustion gas into electric energy.

It is preferable that the fuel cell power generation system according to the present invention further comprise: a hydrogen separator which selectively separates the hydrogen in the reformed gas produced by the reformer to separate the reformed gas into a fuel containing hydrogen as a major component and a residual gas containing carbon dioxide, wherein the reformed gas containing hydrogen produced by the reformer is separated into hydrogen and carbon dioxide by the hydrogen separator, electricity is generated by using the hydrogen as the fuel for the fuel cell instead of the reformed gas, and unreacted hydrogen discharged from the fuel cell is burnt as the fuel for the combustion means, thereby effectively utilizing the hydrogen and converting a part of thermal energy of the combustion gas into electric energy.

According to the first fuel cell operation method of the present invention, since the number of moles of oxygen contained in the air supplied to the air electrode is controlled so that the number of moles of oxygen is 1/2 or less of the number of moles of hydrogen contained in the fuel supplied to the fuel electrode, abundant hydrogen ions exist in the electrolyte at the air electrode. Therefore, a local hydrogen ionization reaction does not occur at the anode electrode which makes up the fuel electrode, whereby a decrease in life due to deterioration of the electrode material and the like can be prevented.

Since the first fuel cell power generation device according to the present invention includes the hydrogen supply measurement means for measuring the number of moles of hydrogen contained in the fuel supplied to the fuel electrode and the oxygen supply control means for controlling the number of moles of oxygen contained in the air supplied to the air electrode, the first fuel cell operation method according to the present invention can be implemented. Therefore, the first fuel cell power generation device causes the fuel electrode to be filled with unreacted hydrogen and prevents a local hydrogen ionization reaction from occurring at the anode electrode which makes up the fuel electrode through the implementation of the first fuel cell operation method, whereby the life of the fuel cell can be prolonged.

According to the second fuel cell operation method of the present invention, since the number of moles of oxygen contained in the air supplied to the air electrode is controlled so that the number of moles of unreacted hydrogen contained in the fuel discharged from the fuel electrode is equal to or greater than a predetermined value, the fuel electrode can be more directly filled with unreacted hydrogen and a local hydrogen ionization reaction does not occur at the anode electrode which makes up the fuel electrode, whereby a decrease in life due to deterioration of the electrode material and the like can be prevented.

Since the second fuel cell power generation device according to the present invention includes the hydrogen discharge measurement means for measuring the number of moles of unreacted hydrogen contained in the fuel discharged from the fuel electrode and the oxygen supply control means for controlling the number of moles of oxygen contained in the air supplied to the air electrode, the second fuel cell operation method according to the present invention can be implemented. Therefore, the second fuel cell power generation device more directly causes the fuel electrode to be filled with unreacted hydrogen and prevents a local hydrogen ionization reaction from occurring at the anode electrode which makes up the fuel electrode through the implementation of the second fuel cell operation method, whereby the life of the fuel cell can be prolonged.

According to the third fuel cell operation method of the present invention, since the temperatures of the module cells are individually measured and the number of moles of oxygen contained in the air supplied to the air electrode is controlled so that the temperature difference between the respective module cells is equal to or less than a predetermined value, occurrence of a local hydrogen ionization reaction at the anode electrode which makes up the fuel electrode can be prevented, whereby a decrease in life due to deterioration of the electrode material and the like can be prevented.

Since the third fuel cell power generation device according to the present invention includes the temperature difference measurement means for measuring the temperature difference between the respective module cells and the oxygen supply control means for controlling the number of moles of oxygen contained in the air supplied to the air electrode, the third fuel cell operation method according to the present invention can be implemented. Therefore, occurrence of a local hydrogen ionization reaction at the anode electrode which makes up the fuel electrode can be indirectly prevented through the implementation of the third fuel cell operation method, whereby the life of the fuel cell can be prolonged.

According to the fourth fuel cell operation method of the present invention, since the voltages of the module cells are individually measured and the number of moles of oxygen contained in the air supplied to the air electrode is controlled so that the voltage difference between the respective module cells is equal to or less than a predetermined value, occurrence of a local hydrogen ionization reaction at the anode electrode which makes up the fuel electrode can be prevented, whereby a decrease in life due to deterioration of the electrode material and the like can be prevented.

Since the fourth fuel cell power generation device according to the present invention includes the voltage difference measurement means for measuring the voltage difference between the respective module cells and the oxygen supply control means for controlling the number of moles of oxygen contained in the air supplied to the air electrode, the fourth fuel cell operation method according to the present invention can be implemented. Therefore, occurrence of a local hydrogen ionization reaction at the anode electrode which makes up the fuel electrode can be indirectly prevented through the implementation of the fourth fuel cell operation method, whereby the life of the fuel cell can be prolonged.

According to the fifth fuel cell operation method of the present invention, since the temperatures of the unit cells are individually measured and the number of moles of oxygen contained in the air supplied to the air electrode is controlled so that the temperature difference between the respective unit cells is equal to or less than a predetermined value, occurrence of a local hydrogen ionization reaction at the anode electrode which makes up the fuel electrode can be prevented, whereby a decrease in life due to deterioration of the electrode material and the like can be prevented.

Since the fifth fuel cell power generation device according to the present invention includes the temperature difference measurement means for measuring the temperature difference between the respective unit cells and the oxygen supply control means for controlling the number of moles of oxygen contained in the air supplied to the air electrode, the fifth fuel cell operation method according to the present invention can be implemented. Therefore, occurrence of a local hydrogen ionization reaction at the anode electrode which makes up the fuel electrode can be indirectly prevented through the implementation of the fifth fuel cell operation method, whereby the life of the fuel cell can be prolonged.

According to the sixth fuel cell operation method of the present invention, since the voltages of the unit cells are individually measured and the number of moles of oxygen contained in the air supplied to the air electrode is controlled so that the voltage difference between the respective unit cells is equal to or less than a predetermined value, occurrence of a local hydrogen ionization reaction at the anode electrode which makes up the fuel electrode can be prevented, whereby a decrease in life due to deterioration of the electrode material and the like can be prevented.

Since the sixth fuel cell power generation device according to the present invention includes the voltage difference measurement means for measuring the voltage difference between the respective unit cells and the oxygen supply control means for controlling the number of moles of oxygen contained in the air supplied to the air electrode, the sixth fuel cell operation method according to the present invention can be implemented. Therefore, occurrence of a local hydrogen ionization reaction at the anode electrode which makes up the fuel electrode can be indirectly prevented through the implementation of the sixth fuel cell operation method, whereby the life of the fuel cell can be prolonged.

In the fuel cell power generation system according to the present invention, since the reformed gas containing hydrogen is effectively utilized and a part of the thermal energy of the combustion gas is converted into electric energy by producing the reformed gas containing hydrogen by the reformer by using a part of the heat of the combustion gas produced by the firing furnace body, generating electricity using the reformed gas as the fuel for the fuel cell, and burning an unreacted reformed gas discharged from the fuel cell as the fuel for the combustion means, the carbon dioxide content in the combustion gas can be decreased to a large extent, and the total amount of fuel to be used can be reduced. Moreover, since the fuel cell is operated so that power generation is rate-determined by the amount of oxygen by relatively reducing the amount of oxygen to be reacted with hydrogen contained in the reformed gas, the unreacted reformed gas containing hydrogen discharged from the fuel cell is not wasted, and the life of the fuel cell can be prolonged by operating the fuel cell in this manner.

### BRIEF DESCRIPTION OF THE DRAWINGS

FIG. 1 is a schematic configuration diagram of a fuel cell illustrative of the technical idea common to first to sixth fuel cell operation methods according to the present invention.

FIG. 2 is a schematic configuration diagram of a fuel cell illustrative of a conventional fuel cell operation method.

FIG. 3 is a schematic configuration diagram showing an embodiment of a fuel cell power generation system according to the present invention.

FIG. 4 is a schematic configuration diagram showing an embodiment of a first fuel cell power generation device according to the present invention.

FIG. 5 is a schematic configuration diagram showing an embodiment of a second fuel cell power generation device according to the present invention.

FIG. 6 is a schematic configuration diagram showing an embodiment of a third fuel cell power generation device according to the present invention.

FIG. 7 is a schematic configuration diagram showing an embodiment of a fourth fuel cell power generation device according to the present invention.

### DETAILED DESCRIPTION OF THE EMBODIMENT

Embodiments of the present invention are described below with reference to the drawings. However, the present invention should not be construed as being limited to the following embodiments. Various alterations, modifications, and improvements may be made within the scope of the present invention based on knowledge of a person skilled in the art. For example, although the drawings indicate preferred embodiments of the present invention, the present invention is not limited to modes indicated in the drawings or to information indicated in the drawings. Although means similar to or equivalent to means described in the present specification may be applied when carrying out or verifying the present invention, preferable means are means as described below.

The first fuel cell power generation device according to the present invention can implement the first fuel cell operation method according to the present invention and exhibits effects through the implementation. However, the first fuel cell operation method according to the present invention is not necessarily realized by only the first fuel cell power generation device according to the present invention, and the first fuel cell operation method is an invention independent of the first fuel cell power generation device. This also applies to the relationship between the second fuel cell operation method and the second fuel cell power generation device, the relationship between the third fuel cell operation method and the third fuel cell power generation device, the relationship between the fourth fuel cell operation method and the fourth fuel cell power generation device, the relationship between the fifth fuel cell operation method and the fifth fuel cell power generation device, and the relationship between the sixth fuel cell operation method and the sixth fuel cell power generation device.

The first to sixth fuel cell operation methods according to the present invention and the first to sixth fuel cell power generation devices according to the present invention are not limited to the type of fuel cell. The first to sixth fuel cell operation methods according to the present invention and the first to sixth fuel cell power generation devices according to the present invention may be applied to various fuel cells such as a phosphoric acid fuel cell, a polymer electrolyte fuel cell, a molten carbonate fuel cell, and a solid oxide fuel cell. Since high-purity hydrogen is necessary for the phosphoric acid fuel cell and the polymer electrolyte fuel cell as the fuel, it is necessary to supply a suitable fuel. However, such a condition does not affect the essence of the present invention. The present specification utilizes the statement "fuel containing hydrogen as the major component". In the case of the phosphoric acid fuel cell and the polymer electrolyte fuel cell, the fuel includes only high-purity hydrogen, and, in the case of the molten carbonate fuel cell and the solid oxide fuel cell, it suffices that the fuel contain hydrogen at a high percentage.

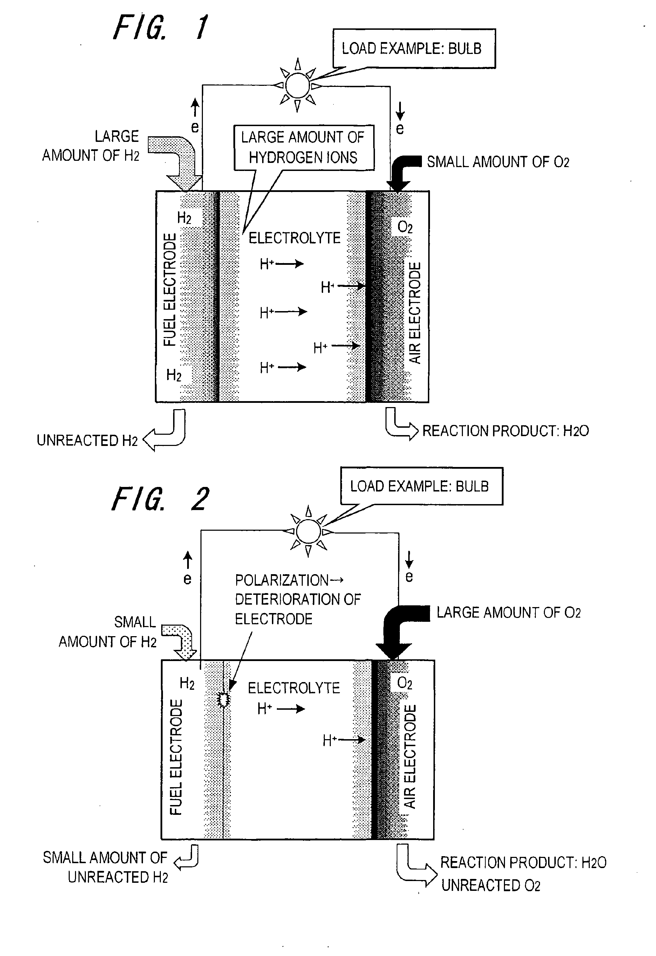

FIG. 1 is a schematic configuration diagram of a fuel cell illustrative of the technical idea common to the first to sixth fuel cell operation methods according to the present invention, and FIG. 2 is a schematic configuration diagram of a fuel cell illustrative of a conventional fuel cell operation method. A fuel cell includes a fuel electrode to which a fuel containing hydrogen as the major component is supplied and an air electrode to which air is supplied as an oxidizing agent, with an electrolyte being provided between the fuel electrode and the air electrode (although the actual fuel cell is formed by stacking a plurality of unit cells, the stacked unit cells are omitted in the drawing). When hydrogen is supplied to the fuel electrode, the hydrogen dissociates into a hydrogen ion (H⁺) and an electron (e). The dissociated electron moves toward the air electrode through an external circuit, and the hydrogen ion which has passed through the electrolyte, the electron from the external circuit, and oxygen react at the air electrode to produce water. Electricity is generated by such reactions, whereby a bulb is energized to light up, for example.

The technical feature which is the technical idea common to the first to sixth fuel cell operation methods according to the present invention and indicates the contribution to prior art is that a sufficient amount of hydrogen with respect to the amount of oxygen is provided to the fuel electrode of the fuel cell, and a small amount of oxygen (air) with respect to the amount of hydrogen is provided to the air electrode in a state in which hydrogen is distributed over the electrolyte and the fuel electrode while controlling the flow rate to effect power generation (see FIG. 1). Specifically, since the production of hydrogen as the fuel cost while inexpensive air can be utilized as oxygen as the oxidizing agent, a conventional fuel cell is operated by supplying oxygen (air) in excess of the amount of hydrogen in order not to waste hydrogen (see FIG. 2). However, the feature of the present invention is that the amount of oxygen is controlled as the rate-determining factor for power generation instead of the amount of hydrogen. A local hydrogen ionization reaction is prevented by providing a small amount of oxygen with respect to the amount of hydrogen in a state in which hydrogen ions are sufficiently distributed over the electrolyte to such an extent that unreacted hydrogen in an amount equal to or greater than a predetermined amount is always discharged from the fuel cell.

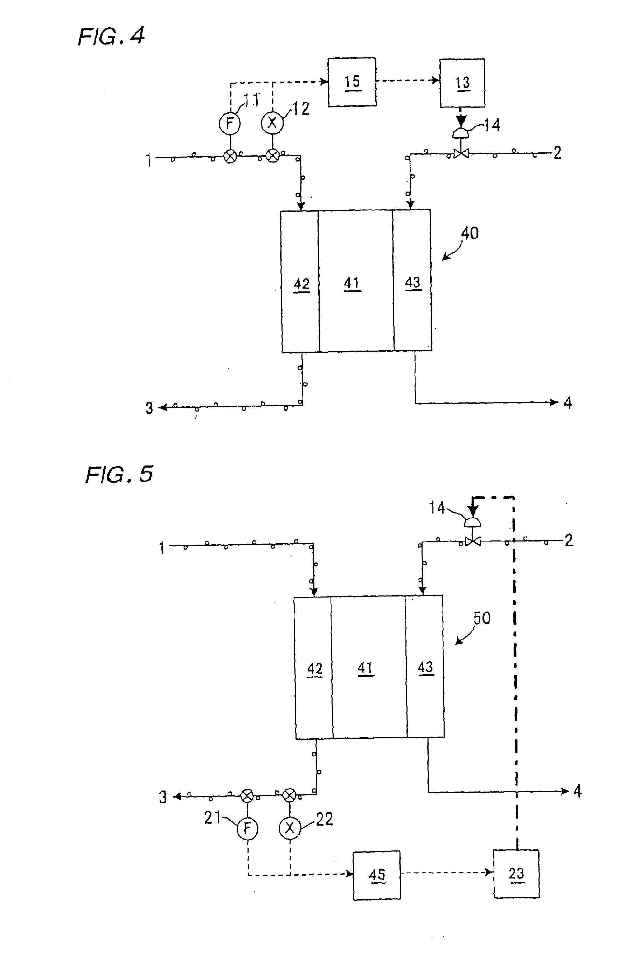

FIG. 4 is a schematic configuration diagram showing an embodiment of the first fuel cell power generation device according to the present invention. A fuel cell 40 includes a fuel electrode 42, an air electrode 43, and an electrolyte 41 provided between the fuel electrode 42 and the air electrode 43 (a plurality of unit cells are stacked in the actual fuel cell). A fuel containing hydrogen 1 as the major component is supplied to the fuel electrode 42, and oxygen 2 (air) is supplied to the air electrode 43 as the oxidizing agent.

The supply system for the hydrogen 1 (fuel) includes hydrogen supply measurement means including a fuel flow meter 11, a hydrogen concentration meter 12, and a calculation device 15, for example. The hydrogen supply measurement means measures the number of moles (amount of substance) of the hydrogen 1 contained in the fuel supplied to the fuel electrode 42. The supply system for the oxygen 2 includes oxygen supply control means including a controller 13 (or control device) and a control valve 14, for example. The oxygen supply control means controls the number of moles (amount of substance) of the oxygen 2 contained in air supplied to the air electrode 43. Since the amount of oxygen in air is usually constant, the number of moles of the oxygen 2 can be controlled by controlling the flow rate of air.

The reaction at the air electrode 43 (O₂+4H⁺+4e →2H₂O) is the reaction between one mole of oxygen and two moles of hydrogen. Therefore, the reaction is regulated by the moles of oxygen 2 supplied which is controlled by the steps of sending the number of moles of the hydrogen 1 contained in the fuel supplied to the fuel electrode 42 measured by the fuel flow meter 11, the hydrogen concentration meter 12 and the calculation device 15 to the controller 13, and controlling the number of moles of the oxygen 2 contained in air supplied to the air electrode 43 in such a manner that the number of moles of the oxygen 2 is 1/2 or less, and preferably less than 1/2 of the number of moles of the hydrogen 1 by controlling the flow rate of air using the control valve 14 based on the number of the moles of hydrogen sent to the controller 13(first fuel cell operation method according to the present invention). The hydrogen 1 remained unreacted due to the short supply of the oxygen 2 as the reaction partner fills the fuel cell 40, and is discharged from the fuel electrode 42 as unreacted hydrogen 3. Water 4 (H₂O) produced as a result of the reaction is also discharged from the air electrode 43 to the outside of the system.

FIG. 5 is a schematic configuration diagram showing an embodiment of the second fuel cell power generation device according to the present invention. A fuel cell 50 includes the fuel electrode 42, the air electrode 43, and the electrolyte 41 provided between the fuel electrode 42 and the air electrode 43 (a plurality of unit cells are stacked in the actual fuel cell). A fuel containing the hydrogen 1 as the major component is supplied to the fuel electrode 42, and the remaining fuel containing the unreacted hydrogen 3 after the reaction (hereafter sometimes referred to as unutilized fuel) is discharged from the fuel electrode 42. The oxygen 2 (air) is supplied to the air electrode 43 as the oxidizing agent, and the water 4 (H₂O) produced as a result of the reaction (O₂+4H⁺4e →2H₂O) is discharged from the air electrode 43.

The discharging system for the unreacted hydrogen 3 (unutilized fuel) includes hydrogen discharge measurement means including a flow meter of unutilized fuel 21, a hydrogen concentration meter 22, and a calculation device 45, for example. The hydrogen discharge measurement means measures the number of moles (amount of substance) of the unreacted hydrogen 3 contained in the unutilized fuel discharged from the fuel electrode 42. The supply system for the oxygen 2 includes oxygen supply control means including a controller 23 (or control device) and the control valve 14, for example. The oxygen supply control means controls the number of moles of the oxygen 2 contained in air supplied to the air electrode 43. Since the amount of oxygen in air is usually constant, the number of moles of the oxygen 2 can be controlled by controlling the flow rate of air.

In the fuel cell 50, to keep a state where a predetermined value or more of unutilized hydrogen 3 in the discharged fuel is always detected is the indirect indication that unreacted hydrogen 1 due to the shortage of supplied oxygen 2 as the reactive partner fills the fuel cell 50. Therefore, a local hydrogen ionization reaction is prevented by sending respectively the number of moles of the unreacted hydrogen 3 contained in the unutilized fuel discharged from the fuel electrode 42 measured by the flow meter of the unutilized fuel 21, the hydrogen concentration meter 22, and the calculation device 45 to the controller 23, and controlling the number of moles of the oxygen 2 contained in air supplied to the air electrode 43 so that the number of moles of the unreacted hydrogen 3 is equal to or greater than a predetermined value by controlling the flow rate of air using the control valve 14 based on the sent data to the controller 23 (second fuel cell operation method according to the present invention). The predetermined value for the number of moles of the unreacted hydrogen 3 may be any amount but other than zero, and is not limited. The value may be arbitrarily determined taking into consideration the accuracy of equipments which make up the hydrogen discharge measurement means.

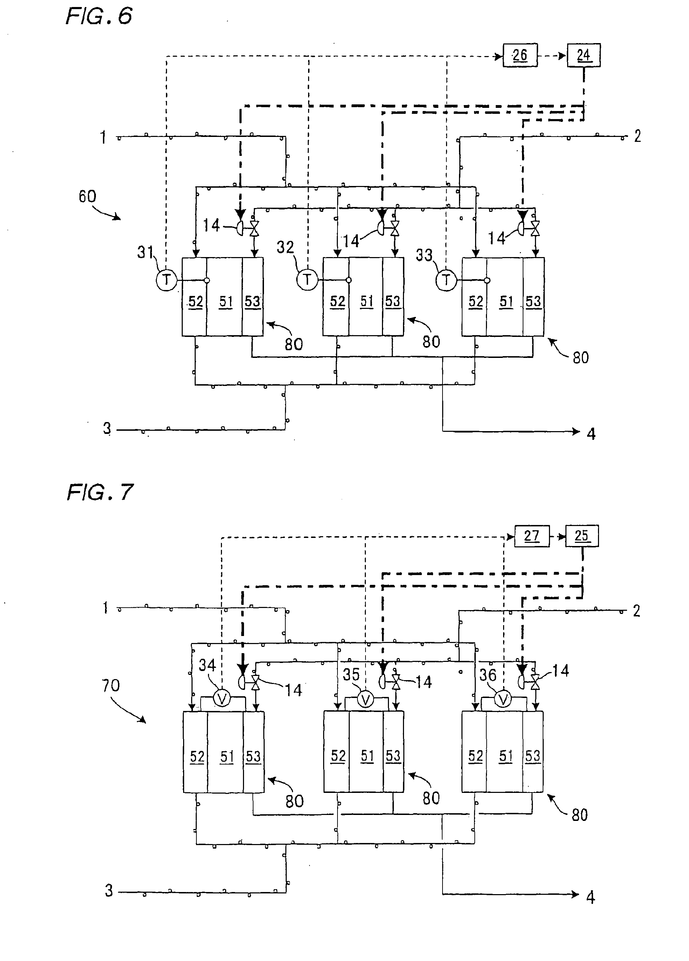

FIG. 6 is a schematic configuration diagram showing an embodiment of the third fuel cell power generation device according to the present invention. A fuel cell 60 includes a plurality (three in this example) of module cells 80, each of the module cells 80 including a fuel electrode 52, an air electrode 53, and an electrolyte 51 provided between the fuel electrode 52 and the air electrode 53 (a plurality of unit cells are stacked in the actual module cell). A fuel containing the hydrogen 1 as the major component is supplied to the fuel electrode 52 of each module cell 80, and an unutilized fuel containing the unreacted hydrogen 3 is discharged from each fuel electrode 52. The oxygen 2 (air) is supplied to each air electrode 43 as the oxidizing agent, and the water 4 (H₂O) produced as a result of the reaction (O₂+4H⁺4e →2H₂O) is discharged from each air electrode 43.

Each module cell 80 includes temperature difference measurement means including a thermometer 31, 32, or 33 which measures the temperature of the module cell 80 and a calculation device 26. The supply system for the oxygen 2 includes oxygen supply control means including a controller 24 (or control device) and a plurality (three in this example) of control valves 14 provided in units of the air electrodes 53 of the module cells 80, for example. The oxygen supply control means controls the number of moles (amount of substance) of the oxygen 2 contained in air supplied to each air electrode 53. Since the amount of oxygen in air is usually constant, the number of moles of the oxygen 2 can be controlled by controlling the flow rate of air.

In the fuel cell 60, when a local hydrogen ionization reaction occurs, electric current is concentrated on the reaction site, whereby an increase in temperature occurs. Specifically, the absence of a local hydrogen ionization reaction is indirectly confirmed by maintaining a state in which the temperature difference between the respective module cells 80 is equal to or less than a predetermined value. Therefore, a local hydrogen ionization reaction is prevented by sending the temperature difference between the module cells 80 measured by the thermometers 31, 32, and 33 and the calculation device 26 to the controller 24, and controlling the number of moles of the oxygen 2 contained in air supplied to the air electrode 43 so that the temperature difference is equal to or less than a predetermined value by controlling the flow rate of air using each control valve 14 based on the sent data to the controller 24 (third fuel cell operation method according to the present invention).

The predetermined value for the temperature difference between the module cells 80 is not limited and is determined based on operational experience. The predetermined value is a numerical value determined taking into consideration the maximum temperature difference between the module cells during stable operation of the fuel cell. Judgment as to whether or not the temperature difference is equal to or less than a predetermined value may be made by calculating the average temperature of the module cells 80 and controlling the flow rate of air for the module cell 80 of which the deviation from the average value is large instead of merely measuring the temperature difference between the module cells 80, for example. Instead of measuring the temperature difference between the respective module cells 80, the temperatures of the unit cells may be individually measured, the temperature difference between the unit cells may be calculated, and the number of moles of the oxygen 2 contained in air supplied may be controlled for each unit cell (fifth fuel cell operation method according to the present invention).

FIG. 7 is a schematic configuration diagram showing an embodiment of the fourth fuel cell power generation device according to the present invention. A fuel cell 70 includes a plurality (three in this example) of module cells 80, each of the module cells 80 including the fuel electrode 52, the air electrode 53, and the electrolyte 51 provided between the fuel electrode 52 and the air electrode 53 (a plurality of unit cells are stacked in the actual module cell). A fuel containing the hydrogen 1 as the major component is supplied to the fuel electrode 52 of each module cell 80, and an unutilized fuel containing the unreacted hydrogen 3 is discharged from each fuel electrode 52. The oxygen 2 (air) is supplied to each air electrode 53 as the oxidizing agent, and the water 4 (H₂O) produced as a result of the reaction (O₂+4H⁺+4e →2H₂O) is discharged from each air electrode 53.

Each module cell 80 includes voltage difference measurement means including a voltmeter 34, 35, or 36 which measures the voltage of the module cell 80 and a calculation device 27. The supply system for the oxygen 2 includes oxygen supply control means including a controller 25 (or control device) and a plurality (three in this example) of control valves 14 provided in units of the air electrodes 53 of the module cells 80, for example. The oxygen supply control means controls the number of moles (amount of substance) of the oxygen 2 contained in air supplied to each air electrode 53. Since the amount of oxygen in air is usually constant, the number of moles of the oxygen 2 can be controlled by controlling the flow rate of air.

In the fuel cell 70, when a local hydrogen ionization reaction occurs, the voltage of the corresponding module cell 80 is increased. Specifically, the absence of a local hydrogen ionization reaction is indirectly confirmed by maintaining a state in which the voltage difference between the module cells 80 is equal to or less than a predetermined value. Therefore, a local hydrogen ionization reaction is prevented by sending the voltage difference between the module cells 80 measured by the voltmeters 34, 35, and 36 and the calculation device 27 to the controller 25, and controlling the number of moles of the oxygen 2 contained in air supplied to the air electrode 43 so that the voltage difference is equal to or less than a predetermined value by controlling the flow rate of air using each control valve 14 based on the data sent to the controller 25 (fourth fuel cell operation method according to the present invention).

The predetermined value for the voltage difference between the module cells 80 is not limited and is determined based on operational experience. The predetermined value is a numerical value determined taking into consideration the maximum voltage difference between the module cells during stable operation of the fuel cell. Judgment as to whether or not the voltage difference is equal to or less than a predetermined value may be made by calculating the average voltage of the module cells 80 and controlling the flow rate of air for the module cell 80 of which the deviation from the average value is large instead of merely measuring the voltage difference between the module cells 80, for example. Instead of measuring the voltage difference between the module cells 80, the voltages of the unit cells may be individually measured, the voltage difference between the unit cells may be calculated, and the number of moles of the oxygen 2 contained in air supplied may be controlled for each unit cell (sixth fuel cell operation method according to the present invention).

The first to sixth fuel cell operation methods according to the present invention and the first to sixth fuel cell power generation devices according to the present invention are described above. According to these inventions, the life of the fuel cell can be prolonged. However, since the amount of unreacted hydrogen (unutilized fuel) is increased in comparison with a conventional method, it is necessary to effectively utilize the unreacted hydrogen. A fuel cell power generation system which can effectively utilize the unreacted hydrogen is described below.

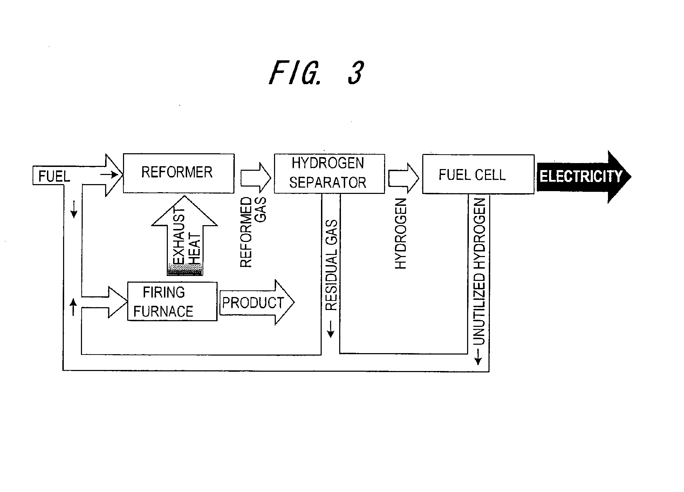

FIG. 3 is a schematic configuration diagram showing an embodiment of the fuel cell power generation system according to the present invention. The fuel cell power generation system includes a firing furnace, a reformer, and a hydrogen separator in addition to a fuel cell. The hydrogen separator is necessary in the case of using a phosphoric acid fuel cell or a polymer electrolyte fuel cell, for which high-purity hydrogen is necessary, as the fuel cell. The hydrogen separator may be omitted in the case of using a molten carbonate fuel cell or a solid oxide fuel cell.

The firing furnace includes a firing furnace body and combustion means. The firing furnace generates a combustion gas by burning a fuel containing methane using the combustion means, and firing a firing target substance carried in the firing furnace body by the combustion gas to obtain a product. The reformer is filled with a methane reforming catalyst. A reformation raw material consisting of a fuel containing methane (not shown) and steam is caused to come in contact with the methane reforming catalyst to undergo a reaction while heating the raw material by utilizing exhaust heat produced by firing using the firing furnace to produce a refined gas consisting of hydrogen and carbon dioxide. The hydrogen separator receives the reformed gas, and separates the reformed gas into a fuel containing hydrogen as the major component and a residual gas containing carbon dioxide by selectively separating the hydrogen in the reformed gas.

The fuel cell receives the high-purity hydrogen obtained by the hydrogen separator as the fuel. The fuel cell is operated by using the fuel cell operation method according to the present invention and generates electricity to produce electric energy. Since the fuel cell operated by using the fuel cell operation method according to the present invention produces unreacted hydrogen in an amount greater than that in a conventional method, the unreacted hydrogen is sent to the firing furnace together with the residual gas produced by the hydrogen separator, and is used as the fuel for the combustion means.

Specifically, in the fuel cell power generation system according to the present invention, since the unreacted hydrogen produced by operating the fuel cell by using the fuel cell operation method according to the present invention is effectively utilized together with the residual gas produced by the hydrogen separator, an increase in environmental load is prevented. Moreover, since the reformed gas is produced by using the exhaust heat produced by combustion using the firing furnace and hydrogen is produced from the reformed gas, the thermal energy of the combustion gas produced by the firing furnace is effectively used and converted into valuable electric energy without causing an increase in environmental load.

The fuel cell operation method according to the present invention is suitable as a method for operating all types of fuel cells including automotive fuel cells, domestic fuel cells, industrial fuel cells, and the like.

## Claims

1. A method for operating a fuel cell in which a plurality of unit cells are stacked, each of the unit cells including a fuel electrode to which a fuel containing hydrogen as a major component is supplied, an air electrode to which air is supplied as an oxidizing agent, and an electrolyte provided between the fuel electrode and the air electrode, the method comprising:
controlling a number of moles of oxygen contained in the air supplied to the air electrode by keeping the number of moles of oxygen at level of 1/2 or less of a number of moles of hydrogen contained in the fuel supplied to the fuel electrode or a number of moles of unreacted hydrogen contained in the fuel discharged from the fuel electrode at a level equal to or greater than a predetermined value.

2. A method for operating a fuel cell formed by connecting a plurality of module cells, each of the module cells being formed by stacking a plurality of unit cells, each of the unit cells including a fuel electrode to which a fuel containing hydrogen as a major component is supplied, an air electrode to which air is supplied as an oxidizing agent, and an electrolyte provided between the fuel electrode and the air electrode, the method comprising:
individually measuring a characteristic value of said plurality of module cells, and controlling a number of moles of oxygen contained in the air supplied to the air electrode by keeping a difference in the characteristic value between the respective module cells at a level equal to or less than a predetermined value, wherein
the characteristic value is temperature or voltage.

3. A method for operating a fuel cell according to claim 2, wherein the temperature each of respective unit cells is measured.

4. A method for operating a fuel cell according to claim 2, wherein the voltage each of the respective unit cells is measured.

5. A fuel cell power generation device, comprising:
a fuel cell in which a plurality of unit cells are stacked, each of the unit cells including a fuel electrode to which a fuel containing hydrogen as a major component is supplied, an air electrode to which air is supplied as an oxidizing agent, and an electrolyte provided between the fuel electrode and the air electrode;
hydrogen supply measurement means; and
oxygen supply control means for controlling a number of moles of oxygen contained in the air supplied to the air electrode based on data measured by the hydrogen supply measurement means, wherein
the hydrogen supply measurement means measures a number of moles of hydrogen contained in the fuel supplied to the fuel electrode or a number of moles of unreacted hydrogen contained in the fuel discharged from the fuel electrode.

6. A fuel cell power generation device, comprising:
a fuel cell formed by connecting a plurality of module cells, each of the module cells being formed by stacking a plurality of unit cells, each of the unit cells including a fuel electrode to which a fuel containing hydrogen as a major component is supplied, an air electrode to which air is supplied as an oxidizing agent, and an electrolyte provided between the fuel electrode and the air electrode;
means for measuring a difference in a characteristic value between the respective module cells; and
oxygen supply control means for controlling a number of moles of oxygen contained in the air supplied to the air electrode based on data measured by the means for measuring a difference in a characteristic value between the respective module cells, wherein
the characteristic value is temperature or voltage.

7. A fuel cell power generation device according to claim 6, wherein the temperature to be measured is a temperature of the respective unit cells.

8. A fuel cell power generation device according to claim 6, wherein the voltage to be measured is a voltage of the respective unit cells.

9. A fuel cell power generation system, comprising:
a firing furnace which includes combustion means for producing a combustion gas by burning a fuel containing methane, and a firing furnace body which fires a firing target substance carried therein by the combustion gas;
a reformer which is filled with a methane reforming catalyst, causes a reformation raw material including the fuel containing methane and steam entering the reformer to come in contact with the methane reforming catalyst while heating the raw material to cause the methane and the steam in the reformation raw material to react, thereby producing a reformed gas containing hydrogen and carbon dioxide; and
a fuel cell power generation device comprising a fuel cell in which a plurality of unit cells are stacked, each of the unit cells including a fuel electrode to which a fuel containing hydrogen as a major component is supplied, an air electrode to which air is supplied as an oxidizing agent, an electrolyte provided between the fuel electrode and the air electrode, a measurement means for measuring a number of moles in hydrogen in the fuel, or a difference in a characteristic value each of the respective unit cells, oxygen supply control means for controlling a number of moles of oxygen contained in the air supplied to the air electrode based on data measured by the measurement means, wherein the measurement means measures a number of moles of hydrogen contained in the fuel supplied to the fuel electrode, a number of moles of unreacted hydrogen contained in the fuel discharged from the fuel electrode, or a difference in a temperature or voltage between the respective unit cells;
wherein the reformed gas containing hydrogen is produced by the reformer by using exhaust heat of the combustion gas produced by the firing furnace body, electricity is generated by using the reformed gas as the fuel for the fuel cell, and an unreacted reformed gas discharged from the fuel cell is burnt as the fuel for the combustion means, thereby effectively utilizing the reformed gas containing hydrogen and converting a part of thermal energy of the combustion gas into electric energy.

10. A fuel cell power generation system according to claim 9, wherein the fuel cell comprises a stacked plurality of module cells which are formed from the stacked plurality of unit cells.

11. The fuel cell power generation system as defined in claim 9, further comprising:
a hydrogen separator which selectively separates the hydrogen in the reformed gas produced by the reformer to separate the reformed gas into a fuel containing hydrogen as a major component and a residual gas containing carbon dioxide;
wherein the reformed gas containing hydrogen produced by the reformer is separated into hydrogen and carbon dioxide using the hydrogen separator, electricity is generated by using the hydrogen instead of the reformed gas as the fuel for the fuel cell, and unreacted hydrogen discharged from the fuel cell is burnt as the fuel for the combustion means, thereby effectively utilizing the hydrogen and converting a part of the thermal energy of the combustion gas into electric energy.

12. The fuel cell power generation system as defined in claim 10, further comprising:
a hydrogen separator which selectively separates the hydrogen in the reformed gas produced by the reformer to separate the reformed gas into a fuel containing hydrogen as a major component and a residual gas containing carbon dioxide;
wherein the reformed gas containing hydrogen produced by the reformer is separated into hydrogen and carbon dioxide using the hydrogen separator, electricity is generated by using the hydrogen instead of the reformed gas as the fuel for the fuel cell, and unreacted hydrogen discharged from the fuel cell is burnt as the fuel for the combustion means, thereby effectively utilizing the hydrogen and converting a part of the thermal energy of the combustion gas into electric energy.
